# EUROPEAN PATENT APPLICATION

(11) **EP 4 692 632 A1**
(43) Date of publication of application: **11.02.2026**
(21) Application number: 23930915.6
(22) Date of filing: 13.12.2023
(51) Int. Cl.: F16M 13/00, F16B 2/04, G01N 35/02

(54) **HEIGHT ADJUSTMENT DEVICE AND HEIGHT ADJUSTMENT METHOD**

(30) Priority: 31.03.2023 JP 2023057298
(71) Applicant: HITACHI HIGH-TECH CORPORATION, Tokyo 105-6409 (JP)
(72) Inventor: AIHARA, Hiroki, Tokyo 105-6409 (JP); YAMASHITA, Taichiro, Tokyo 105-6409 (JP)
(74) Representative: MERH-IP Matias Erny Reichl Hoffmann Patentanwälte PartG mbB
(86) International application number: PCT/JP2023/044653
(87) International publication number: WO 2024/202295

(57) **Abstract**

Provided is a height adjustment device capable of fixing a component member to a horizontal surface, and adjusting a height dimension with respect to a reference surface from the upper side of the device. A height adjustment device 113 comprises: a fixed member 201 that is fixed to a horizontal surface 112; a hollow rod member 202; a vertical position movable member 203 that is fixed to the fixed member 201 with the rod member 202 therebetween on an upper surface of the fixed member 201; and a diameter-expanding pressing member 204 that presses the rod member 202 in a diameter-expanding direction. A hole into which the rod member 202 is inserted from a lower surface toward an upper surface of the vertical position movable member 203 is formed in the vertical position movable member 203, an opening 205 is formed on the upper surface of the vertical position movable member 203 by inserting the rod member 202 into the hole, the diameter-expanding pressing member 204 is inserted downward into the hollow portion of the rod member 202 from above the opening 205, and the rod member 202 is pressed in the diameter-expanding direction whereby the position of the vertical position movable member 203 is fixed.

## Description

### Technical Field

The present invention relates to a height adjustment device and a height adjustment method.

### Background Art

According to PTL 1, a technique of mixing a liquid to be stirred (a sample and a reagent) in a reaction container in a non-contact manner using an effect of an acoustic radiation pressure of an ultrasonic wave is developed and implemented in a biochemical automatic analyzer and put into practical use.

In this technique, a sine wave, a rectangular wave, or the like is applied to a piezoelectric element at a frequency near a thickness resonance frequency to generate an ultrasonic wave, and the ultrasonic wave is irradiated toward the liquid to be stirred from an outside of the reaction container, thereby mixing the liquid to be stirred.

In an automatic analyzer on which such an ultrasonic non-contact stirring technique (hereinafter referred to as "stirring mechanism") is mounted, a reagent and a sample to be analyzed are dispensed into the reaction container, and the reaction container is irradiated with ultrasonic waves to be stirred.

In order to sufficiently stir the reagent and the sample in the reaction container, it is necessary to adjust a height of the stirring mechanism with respect to the reaction container.

PTL 2 discloses a technique in which, in a connection mechanism of a rod member, one rod member 1a is a pipe-shaped portion 3, a collar 13 provided with a tapered screw portion 6 and a tapered screw portion 11 and having slits 12 and 14 is provided on a fixing base portion 7 at a tip end of a rod member 1b, and the collar 13 is radially expanded by rotating the fixing base portion 7 to be pressed against an inner peripheral surface of the pipe-shaped portion 3.

According to the technique described in PTL 2, since the two rod-shaped members can be fixed at any positions, a total length of the two rod-shaped members can be adjusted.

### Citation List

### Patent Literature

PTL 1: JP3746239B
PTL 2: JP2009-257365A

### Summary of Invention

### Technical Problem

The automatic analyzer includes of a plurality of units, and it is difficult to adjust a mechanism of adjusting an attachment height of the stirring mechanism from front, side, and back sides of the analyzer due to a layout in the analyzer.

In the technique described in PTL 2, in order to make it possible to adjust the height of the analyzer with respect to a reference surface from the upper side by the two rod-shaped members, a mechanism of fixing the analyzer on a horizontal surface or how to move the mechanism in the vertical direction using the two rod-shaped members is required, but this is not disclosed.

An object of the present disclosure is to provide a height adjustment device and a height adjustment method capable of fixing a component member to a horizontal surface and adjusting a height dimension with respect to a reference surface from an upper side of the device.

### Solution to Problem

To achieve the above object, the present disclosure is formed as follows.

A height adjustment device includes a fixed member fixed to a horizontal surface; a hollow rod member; a vertical position movable member fixed to the fixed member via the rod member on an upper surface of the fixed member; and a diameter-expanding pressing member configured to press the rod member in a diameter-expanding direction. A hole into which the rod member is inserted from a lower surface to an upper surface of the vertical position movable member is formed in the vertical position movable member, an opening is formed in the upper surface of the vertical position movable member by inserting the rod member into the hole, the diameter-expanding pressing member is inserted into a hollow portion of the rod member from above to below the opening, and a position of the vertical position movable member is fixed by pressing the rod member in the diameter-expanding direction.

Further, a height adjustment method includes: disposing a hollow rod member on an upper surface of a fixed member fixed to a horizontal surface, and disposing the fixed member having a hole penetrating from an upper surface to a lower surface above the rod member; inserting the rod member into the hole of the fixed member from a side of the lower surface to set a position of the fixed member; inserting a diameter-expanding pressing member into the hole from an upper side of the fixed member to be inserted into a hollow portion of the rod member; and fixing a position of a vertical position movable member by pressing the rod member in a diameter-expanding direction.

### Advantageous Effects of Invention

According to the present disclosure, it is possible to provide a height adjustment device and a height adjustment method capable of fixing a component member to a horizontal surface and adjusting a height dimension with respect to a reference surface from an upper side of the device.

Problems, configurations, and effects other than those described above will be clarified by the description of the following embodiments.

### Brief Description of Drawings

[FIG. 1] FIG. 1 is a diagram showing a configuration example of an automatic chemical analyzer to which a height adjustment device and a height adjustment method of the present disclosure are applied.
[FIG. 2] FIG. 2 is a diagram showing a configuration example of a stirring mechanism to which the height adjustment device of the present disclosure is applied.
[FIG. 3] FIG. 3 is a schematic cross-sectional view of a height adjustment device of Embodiment 1 of the present disclosure.
[FIG. 4A] FIG. 4A is a top view of a hollow rod member of Embodiment 1.
[FIG. 4B] FIG. 4B is a front view of the hollow rod member of Embodiment 1.
[FIG. 4C] FIG. 4C is a side view of the hollow rod member of Embodiment 1.
[FIG. 4D] FIG. 4D is a cross-sectional view of the hollow rod member of Embodiment 1.
[FIG. 5] FIG. 5 is a front view of a fixing screw of Embodiment 1.
[FIG. 6] FIG. 6 is a diagram of a method of adjusting and fixing a height with respect to a reference surface of Embodiment 1.
[FIG. 7A] FIG. 7A is a diagram showing a specific product example of the height adjustment device of Embodiment 1.
[FIG. 7B] FIG. 7B is a partial cross-sectional view of the example shown in FIG. 7A.
[FIG. 8] FIG. 8 is a cross-sectional view of a hollow rod member of Embodiment 2.
[FIG. 9] FIG. 9 is a diagram of a method of adjusting and fixing a height with respect to a reference surface of Embodiment 2.

### Description of Embodiments

Hereinafter, embodiments of the present disclosure will be described in detail with reference to the drawings.

### [Embodiments]

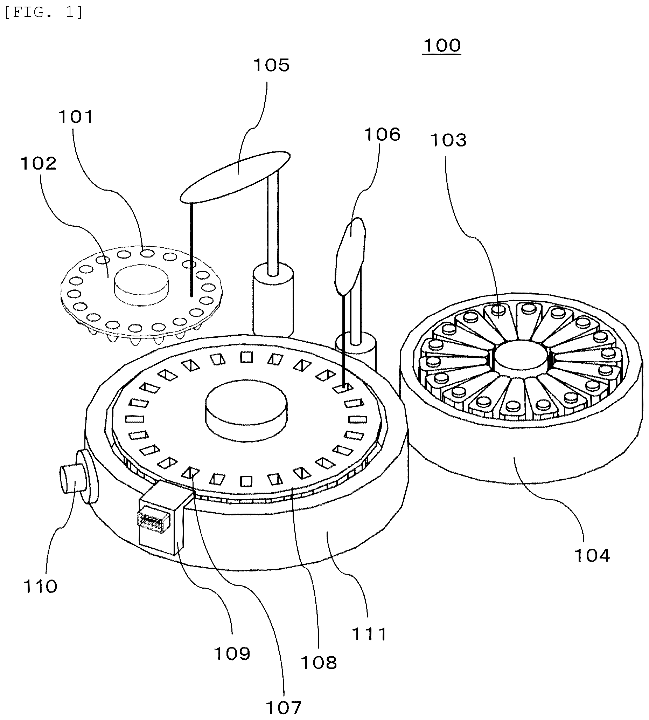

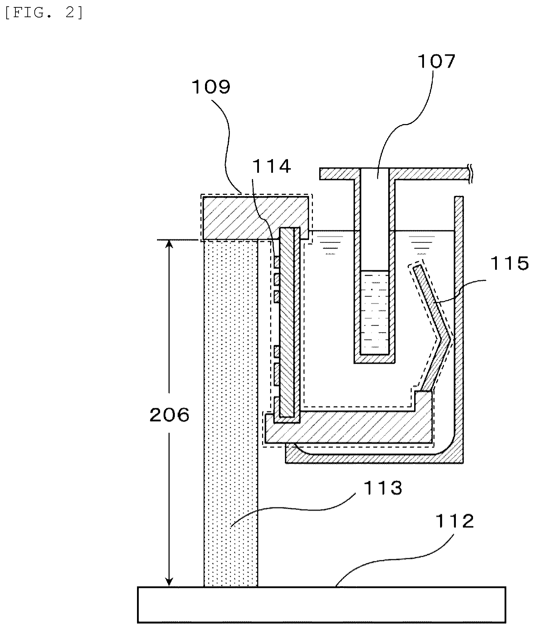

FIG. 1 is a diagram showing a configuration example of an automatic chemical analyzer (automatic analyzer) 100 to which height adjustment devices and height adjustment methods according to Embodiments 1 to 3 are applied. FIG. 2 is a diagram showing a configuration example of a stirring mechanism to which the height adjustment devices according to Embodiments 1 to 3 are applied.

The automatic chemical analyzer 100 dispenses a sample and a reagent into a reaction container 107 by a sample dispenser 105 and a reagent dispenser 106, respectively. As a result, a liquid to be stirred is generated in the reaction container 107. The reaction containers 107 into which the samples and the reagents are dispensed are disposed on a reaction disk 108 along a circumferential direction. The reaction container 107 rotates clockwise in this example.

The liquid to be stirred in the reaction container 107 is stirred and mixed in a non-contact manner in an ultrasonic stirring mechanism 109. A reaction between the mixed sample and reagent is promoted, and absorbance characteristics thereof are measured by an absorption spectrometer 110. After an absorbance measurement (that is, analysis) is completed, the reaction container 107 is cleaned by a cleaning mechanism (not shown).

A next sample is dispensed into the reaction container 107 after the cleaning, and a series of analysis sequences described above are repeated.

Each of the reaction containers 107 disposed in the circumferential direction on the reaction disk 108 is in contact with constant-temperature water circulating in a constant-temperature bath 111, and is maintained at a constant temperature via the constant-temperature water having a designated temperature. In this example, the constant-temperature water is used as an example of a liquid that mediates sound waves, but in other embodiments, the liquid that mediates sound waves is not limited to a constant-temperature liquid and is not limited to water.

A host computer (not shown) is mounted on the automatic chemical analyzer 100. The host computer exchanges signals with a sample disk 102 in which a sample cup 101 is held, a reagent cooling disk 104 in which a reagent bottle 103 is held, the sample dispenser 105, the reagent dispenser 106, the reaction disk 108, and the like, and transmits commands to them to control respective operation sequences. The host computer controls overall operations of the automatic chemical analyzer 100.

The host computer can be implemented as a known computer. For example, the host computer includes a calculation unit of performing calculation and a storage unit of storing information. The calculation unit is, for example, a processor, and the storage unit is, for example, a semiconductor memory and a magnetic disk device. The host computer may include an input unit of inputting information, an output unit of outputting information, a communication unit of transmitting and receiving information via a communication path, and the like.

The input unit is, for example, a keyboard and a mouse, the output unit is, for example, a display device and a printing device, and the communication unit is, for example, a network interface.

FIG. 2 is a diagram showing a configuration example of the ultrasonic stirring mechanism 109 to which the height adjustment device of the present disclosure is applied, and includes a cross section of the ultrasonic stirring mechanism 109 (a portion surrounded by a broken line) shown in FIG. 1. FIG. 2 includes a cross section parallel to a vertical direction and a radial direction of the reaction disk 108.

The automatic chemical analyzer 100 performs stirring by irradiating the reaction container 107 with ultrasonic waves from a piezoelectric element 114 by the ultrasonic stirring mechanism 109 attached to an upper portion of a height adjustment device 113. For this purpose, the automatic chemical analyzer 100 includes the ultrasonic stirring mechanism 109.

The ultrasonic stirring mechanism 109 is attached to a horizontal surface 112, and a height position is adjusted by the attachment height adjustment device 113 capable of adjusting an attachment height 206 with respect to the reaction container 107. The sound wave generated by the piezoelectric element 114 is reflected by a reflection plate 115.

### (Embodiment 1)

Next, Embodiment 1 of the present disclosure will be described.

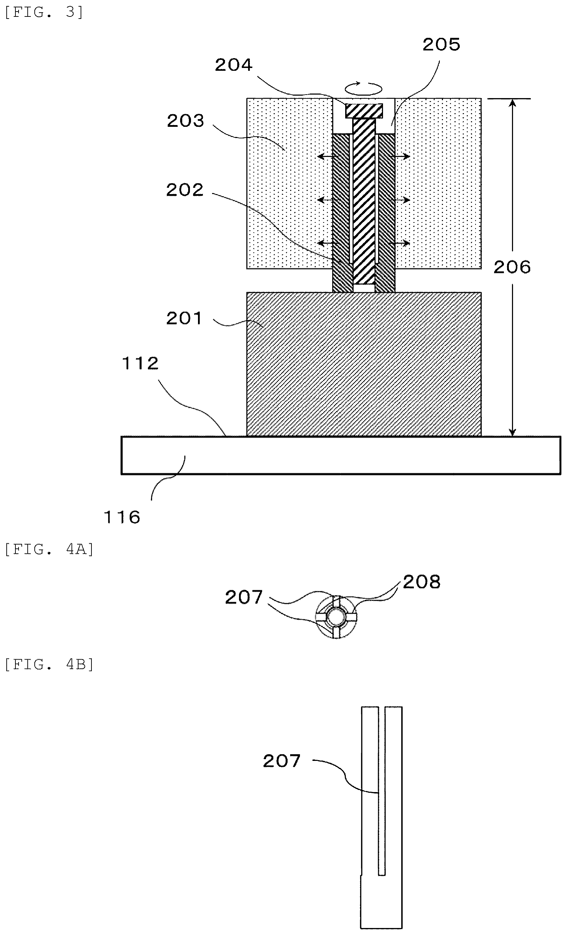

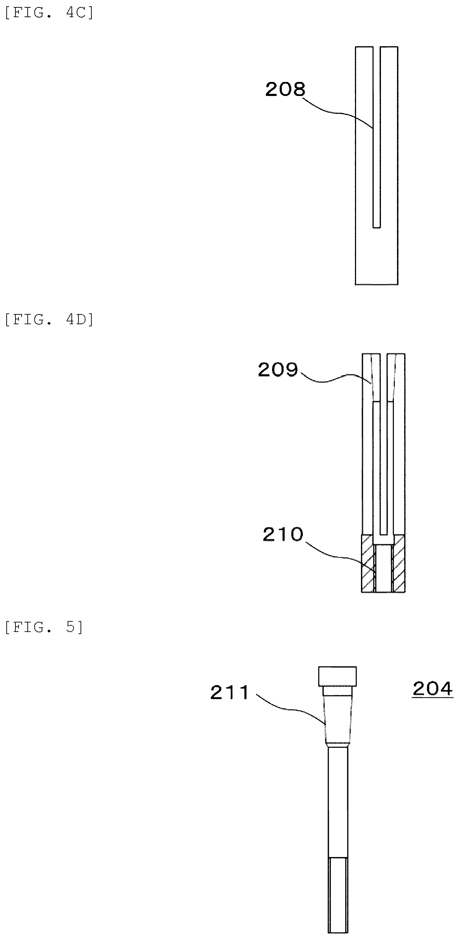

FIG. 3 is a schematic cross-sectional view of the height adjustment device 113 according to Embodiment 1 of the present disclosure. FIG. 4A is a top view of a hollow rod member 202 of the height adjustment device 113 according to Embodiment 1. FIG. 4B is a front view of the hollow rod member 202 of the height adjustment device 113 according to Embodiment 1. FIG. 4C is a side view of the hollow rod member 202 of the height adjustment device 113 according to Embodiment 1. FIG. 4D is a cross-sectional view of the hollow rod member 202 of the height adjustment device 113 according to Embodiment 1.

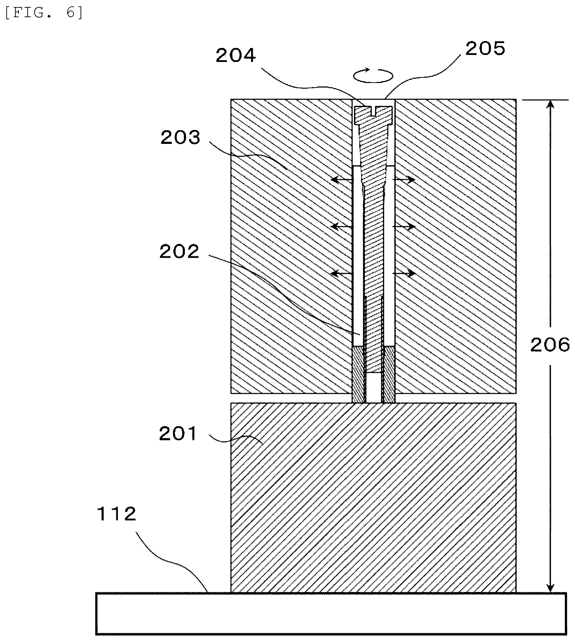

FIG. 5 is a front view of a fixing screw 204 inserted into the hollow rod member 202 of the height adjustment device 113 according to Embodiment 1. FIG. 6 is a diagram of a method of adjusting and fixing the height 206 with respect to a reference surface in Embodiment 1.

Embodiment 1 of the present disclosure will be described with reference to FIGS. 3 to 6.

In FIG. 3, the height adjustment device 113 includes a fixed member 201 fixed to the horizontal surface 112 of a horizontal fixing table 116, the hollow rod member 202 formed to be elongated in the vertical direction, and a vertical position movable member 203 fixed to the fixed member 201 via the hollow rod member 202 on an upper surface of the fixed member 201. A hole penetrating from an upper surface to a lower surface is formed in the vertical position movable member 203, and an opening 205 is formed in the upper surface of the vertical position movable member 203 by inserting the rod member 202 into the hole from the lower surface to the upper surface. At this time, a height position of the vertical position movable member 203 can be set. The fixing screw (male screw) 204 is inserted into a hollow portion of the rod member 202 from an upper side to a lower side of the opening 205 to be fastened, so that the rod member 202 applies a force in a horizontal direction (diameter expansion method) to the vertical position movable member 203 to fix the vertical position movable member 203.

By loosening the fixing screw 204, the force in the horizontal direction for fixing the vertical position movable member 203 is eliminated, and the height 206 with respect to the horizontal surface 112 as the reference surface can be adjusted.

As shown in FIG. 4A, FIG. 4B, and FIG. 4C, the hollow rod member 202 is formed with a first cutout portion 207 that is cut out to be elongated in the vertical direction (length direction), and a second cutout portion 208 that is cut out to be elongated in the vertical direction (length direction) at a predetermined distance from the first cutout portion 207 along a circumferential direction of the rod member 202.

As shown in FIG. 4D, a taper is formed in an inner periphery of an upper end portion 209 of the hollow rod member 202, and is a female screw at an inner surface of a lower end portion 210.

As shown in FIG. 5, a taper is formed in an outer periphery of a root portion 211 of the fixing screw 204.

FIG. 6 is a diagram of a method of adjusting and fixing a height of the vertical position movable member 203 with respect to the horizontal surface 112 as the reference surface.

In FIG. 6, in a state where an operator adjusts the height of the vertical position movable member 203 from an upper side and holds the vertical position movable member 203 at an appropriate position, the fixing screw 204 is tightened from above the vertical position movable member 203 by a driver or the like, and the hollow rod member 202 in which the first cutout portion 207 and the second cutout portion 208 are formed is expanded in diameter along a tapered surface of the fixing screw 204, so that the rod member 202 applies a force in the horizontal direction of the vertical position movable member 203 and the position of the vertical position movable member 203 is fixed.

Accordingly, a height dimension of the ultrasonic stirring mechanism 109 attached to an upper portion of the height adjustment device 113 having the vertical position movable member 203 with respect to the reference surface can be adjusted from an upper side of the automatic analyzer.

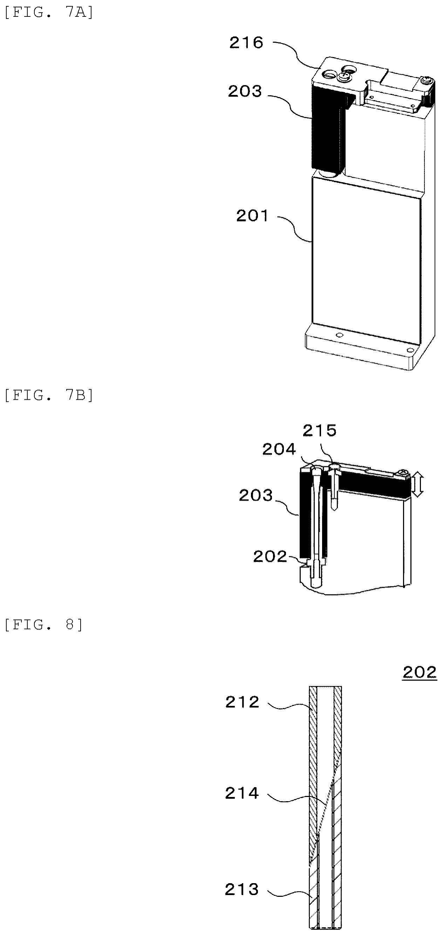

FIG. 7A is a diagram showing a specific product example of the height adjustment device 113 according to Embodiment 1, and FIG. 7B is a partial cross-sectional view of the example shown in FIG. 7A.

In FIG. 7A, the vertical movable member 203 is disposed at an upper portion of the fixed member 201, and a stirring mechanism attachment base 216 is disposed at an upper portion of the vertical movable member 203. The ultrasonic stirring mechanism 109 is attached to the stirring mechanism attachment base 216.

In FIG. 7B, the vertical movable member 203 is disposed on the fixed member 201, and the height of the vertical movable member 203 is adjusted by a height adjustment screw 215. Then, the fixing screw 204 is inserted into the hollow rod member 202 and rotated to fix the vertically movable member 203 to the fixed member 201.

According to Embodiment 1 of the present disclosure, it is possible to provide the height adjustment device 113 and the height adjustment method capable of fixing the fixed member 201, which is a component member, to the horizontal surface 112 and adjusting a height dimension with respect to the reference surface from the upper side of the automatic chemical analyzer 100.

### (Embodiment 2)

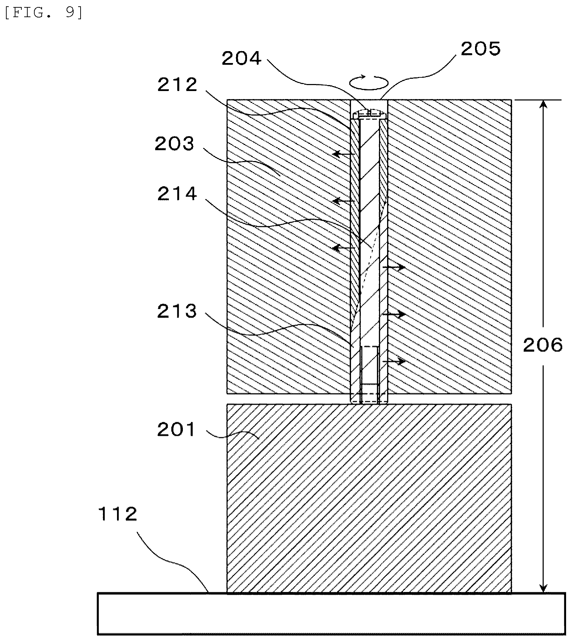

Hereinafter, Embodiment 2 of the present disclosure will be described with reference to FIG. 8 and FIG. 9.

Embodiment 2 is different from Embodiment 1 in shapes of the hollow rod member 202 and the fixing screw 204 in FIG. 6 shown in Embodiment 1.

FIG. 8 is a cross-sectional view of the hollow rod member 202 in Embodiment 2, and FIG. 9 is a diagram of a method of adjusting and fixing a height with respect to the horizontal surface 112 as the reference surface of Embodiment 2.

In FIGS. 8 and 9, the hollow rod member 202 includes a first rod member 212 and a second rod member 213 disposed below the first rod member 212, and the second rod member 213 has a female screw formed in an inner diameter thereof. The fixing screw 204 inserted into the hollow rod member 202 is implemented by a general-purpose male screw that is generally used.

A contact portion 214 between a lower end surface of the first rod member 212 and an upper end surface of the second rod member 213 is inclined at a predetermined angle with respect to the horizontal surface and is in contact with each other. A female screw is formed on an inner surface of a lower end portion of the second rod member 213.

In FIG. 9, the fixing screw 204 is inserted into the hollow rod member 202 and rotated to be engaged with and fastened to the female screw of the second rod member 213, so that the first rod member 212 and the second rod member are slid in the diameter-expanding direction of the vertical position movable member 203 along the inclination of the contact portion 214. Accordingly, the first rod member 212 and the second rod member 213 apply a force in the horizontal direction of the vertical position movable member 203 to fix the position of the vertical position movable member 203.

Therefore, the height dimension of the ultrasonic stirring mechanism 109 attached to the upper portion of the height adjustment device 113 having the vertical position movable member 203 with respect to the reference surface can be adjusted from the upper side of the analyzer.

According to Embodiment 2 of the present disclosure, it is possible to provide the height adjustment device 113 and the height adjustment method capable of fixing the fixed member 201, which is a component member, to the horizontal surface 112 and adjusting a height dimension with respect to the reference surface from the upper side of the automatic chemical analyzer 100.

Further, the present disclosure is not limited to the embodiments described above, and is also applicable to, for example, industrial equipment other than the automatic analyzer such as a cleaning device or an inspection device using sound waves.

Further, although the fixing screw 204 is used as a member for fixing the vertical position movable member 203 to the rod member 202, the member is not limited to the screw and may be a tapered rod member as long as the member can press the hollow rod member 202 in the diameter-expanding direction. Therefore, a member that presses the hollow rod member 202 in the diameter-expanding direction, including the fixing screw 204, is collectively referred to as the diameter-expanding pressing member.

### Reference Signs List

- 100:: automatic chemical analyzer (automatic analyzer)
- 101:: sample cup
- 102:: sample disk
- 103:: reagent bottle
- 104:: reagent cooling disk
- 105:: sample dispenser
- 106:: reagent dispenser
- 107:: reaction container
- 108:: reaction disk
- 109:: ultrasonic stirring mechanism
- 110:: absorption spectrometer
- 111:: attachment height adjustment mechanism
- 112:: horizontal surface
- 113:: height adjustment device
- 114:: piezoelectric element
- 115:: reflection plate
- 116:: horizontal fixing table
- 201:: fixed member
- 202:: hollow rod member
- 203:: vertical position movable member
- 204:: fixing screw (diameter-expanding pressing member (male screw))
- 205:: opening
- 206:: height with respect to reference surface
- 207:: first cutout portion
- 208:: second cutout portion
- 209:: upper end portion
- 210:: lower end portion
- 211:: root portion
- 212:: first rod member
- 213:: second rod member
- 214:: contact portion
- 215:: height adjustment screw
- 216:: stirring mechanism attachment base

## Claims

1. A height adjustment device comprising:
a fixed member fixed to a horizontal surface;
a hollow rod member;
a vertical position movable member fixed to the fixed member via the rod member on an upper surface of the fixed member; and
a diameter-expanding pressing member configured to press the rod member in a diameter-expanding direction, wherein
a hole into which the rod member is inserted from a lower surface to an upper surface of the vertical position movable member is formed in the vertical position movable member, an opening is formed in the upper surface of the vertical position movable member by inserting the rod member into the hole, the diameter-expanding pressing member is inserted into a hollow portion of the rod member from above to below the opening, and a position of the vertical position movable member is fixed by pressing the rod member in the diameter-expanding direction.

2. The height adjustment device according to claim 1, wherein
the rod member is formed with a first cutout portion that is cut out to be elongated in a length direction, and a second cutout portion that is cut out to be elongated in the length direction at a predetermined distance from the first cutout portion along a circumferential direction of the rod member.

3. The height adjustment device according to claim 1, wherein
the rod member includes a first rod member and a second rod member disposed below the first rod member, a lower end surface of the first rod member is in contact with an upper end surface of the second rod member, and the lower end surface of the first rod member and the upper end surface of the second rod member are inclined at a predetermined angle with respect to the horizontal surface.

4. The height adjustment device according to claim 2 or 3, wherein
the diameter-expanding pressing member is a male screw, and a female screw is formed on an inner surface of a lower end portion of the rod member.

5. The height adjustment device according to claim 4, wherein
a taper is formed on an outer periphery of a root portion of the male screw, and by engaging and rotating the male screw with the female screw, a diameter of the rod member is expanded along the taper, and the vertical position movable member is fixed.

6. The height adjustment device according to claim 1, wherein
a height position of an ultrasonic stirring mechanism in an automatic analyzer is adjusted.

7. A height adjustment method comprising:
disposing a hollow rod member on an upper surface of a fixed member fixed to a horizontal surface, and disposing the fixed member having a hole penetrating from an upper surface to a lower surface above the rod member;
inserting the rod member into the hole of the fixed member from a side of the lower surface to set a position of the fixed member;
inserting a diameter-expanding pressing member into the hole from an upper side of the fixed member to be inserted into a hollow portion of the rod member; and
fixing a position of a vertical position movable member by pressing the rod member in a diameter-expanding direction.

8. The height adjustment method according to claim 7, wherein
the rod member is formed with a first cutout portion that is cut out to be elongated in a length direction, and a second cutout portion that is cut out to be elongated in the length direction at a predetermined distance from the first cutout portion along a circumferential direction of the rod member, and the rod member is pressed in the diameter-expanding direction by inserting the diameter-expanding pressing member into the hollow portion of the rod member.

9. The height adjustment method according to claim 7, wherein
the rod member includes a first rod member and a second rod member disposed below the first rod member, a lower end surface of the first rod member is in contact with an upper end surface of the second rod member, the lower end surface of the first rod member and the upper end surface of the second rod member are inclined at a predetermined angle with respect to the horizontal surface, and
the lower end surface of the first rod member and the upper end surface of the second rod member are slid in the diameter-expanding direction by inserting the diameter-expanding pressing member into the hollow portion of the rod member.

10. The height adjustment method according to claim 7 or 8, wherein
the diameter-expanding pressing member is a male screw, a female screw is formed on an inner surface of a lower end portion of the rod member, and the rod member is pressed in the diameter-expanding direction by engaging and rotating the male screw with the female screw.

11. The height adjustment method according to claim 8, wherein
the diameter-expanding pressing member is a male screw, a female screw is formed on an inner surface of a lower end portion of the rod member, a taper is formed on an outer periphery of a root portion of the male screw, and a diameter of the rod member is expanded along the taper, and the vertical position movable member is fixed by engaging and rotating the male screw with the female screw.

12. The height adjustment method according to claim 7, wherein
a height position of an ultrasonic stirring mechanism in an automatic analyzer is adjusted.
